# EUROPÄISCHE PATENTSCHRIFT

(11) **EP 3 280 930 B1**
(45) Veröffentlichungstag und Bekanntmachung des Hinweises auf die Patenterteilung: **03.03.2021**
(21) Anmeldenummer: 16721352.9
(22) Anmeldetag: 23.03.2016
(51) Int. Cl.: F16F 15/14

(54) **FLIEHKRAFTPENDEL**
CENTRIFUGAL PENDULUM
PENDULE CENTRIFUGE

(30) Priorität: 09.04.2015 DE 102015206289; 07.05.2015 DE 102015208463
(43) Veröffentlichungstag der Anmeldung: 14.02.2018
(73) Patentinhaber: Schaeffler Technologies AG & Co. KG, 91074 Herzogenaurach (DE)
(72) Erfinder: STRASSER, Pascal, 67250 Aschbach (FR)
(86) Internationale Anmeldenummer: PCT/DE2016/200153
(87) Internationale Veröffentlichungsnummer: WO 2016/162026

(56) Entgegenhaltungen:
- EP-A1- 2 667 050
- DE-T5-112013 002 877
- DE-T5-112013 002 877
- FR-A1- 2 986 592

## Beschreibung

Die Erfindung betrifft ein Fliehkraftpendel mit einem Trägerteil und an diesem an Pendellagern im Fliehkraftfeld pendelnd aufgehängten, über den Umfang verteilt angeordneten Pendelmassen.

Fliehkraftpendel insbesondere für einen Antriebsstrang eines Kraftfahrzeugs sind zur drehzahladaptiven Isolation von Drehschwingungen hinreichend bekannt. Beispielsweise ist aus der DE 10 2011 100 868 A1 ein Fliehkraftpendel mit einem um eine Drehachse drehenden Trägerteil wie Pendelflansch bekannt, beim über den Umfang verteilt angeordnete Pendelmassen mittels jeweils zwei in Umfangsrichtung beabstandeter Pendellager pendelnd aufgehängt sind. In dem gezeigten Ausführungsbeispiel sind die Pendelmassen beidseitig des Trägerteils angeordnet, wobei jeweils axial gegenüberliegende Pendelmassen mittels Verbindungsmitteln, die entsprechende Öffnungen oder Ausnehmungen des Trägerteils durchgreifen, zu Pendelmasseneinheiten verbunden sind. Die Pendellager sind dabei mittels Ausnehmungen in dem Trägerteil und den Pendelmassen gebildet, auf deren Laufbahnen die Ausnehmungen axial durchgreifende Pendelrollen abrollen, wobei bei vorhandenen Drehschwingungen die Pendelmassen entsprechend der durch die Ausbildung der Laufbahnen vorgegebenen Pendelbahnen pendeln und damit potentielle Energie aufnehmen und wieder abgeben, so dass der Antriebsstrang beruhigt wird. Alternativ zu der Ausbildung eines zentralen Pendelflanschs kann das Fliehkraftpendel ein aus zwei Seitenteilen gebildetes Trägerteil enthalten, zwischen denen axial angeordnete Pendelmassen pendelnd aufgehängt sind. Die Qualität der Schwingungsisolation und der Wirkungsgrad des Fliehkraftpendels hängen dabei unter anderem von der im vorgegebenen Bauraum untergebrachten Masse der Pendelmasse und deren Schwerpunktlage ab

Weiterhin offenbart das Dokument DE112013002877T ein Fliehkraftpendel entsprechend dem Oberbegriff des Anspruchs 1.

Aufgabe der Erfindung ist ein Fliehkraftpendel mit verbesserter Schwerpunktlage und erhöhter Masse der Pendelmasse vorzuschlagen.

Die Aufgabe wird durch den Gegenstand des Anspruchs 1 gelöst. Die von diesem abhängigen Ansprüche geben vorteilhafte Ausführungsformen des Gegenstands des Anspruchs 1 wieder.

Das vorgeschlagene Fliehkraftpendel ist insbesondere für einen Antriebsstrang eines Kraftfahrzeugs vorgesehen und kann separat als drehzahladaptiver Drehschwingungstilger eingesetzt werden. Alternativ kann das Fliehkraftpendel in ein weiteres Aggregat des Antriebsstrangs integriert sein, beispielsweise ein- und/oder ausgangsseitig in einen Drehschwingungsdämpfer, beispielsweise in ein Zweimassenschwungrad, in eine Kupplungsscheibe, in eine Reibungskupplung, in einen hydrodynamischen Drehmomentwandler, an einen Rotor einer Elektromaschine oder dergleichen. Bei Anordnung des Fliehkraftpendels in Verbindung mit einem hydrodynamischen Drehmomentwandler kann das Fliehkraftpendel innerhalb oder außerhalb eines Wandlergehäuses untergebracht sein, also nass oder trocken betrieben werden. Beispielsweise kann das Trägerteil des Fliehkraftpendels an einem Eingangsteil und/oder einem Ausgangsteil eines Drehschwingungsdämpfers einer Wandlerüberbrückungskupplung, beispielsweise einem sogenannten Lock-Up-Dämpfer angeordnet sein. Es versteht sich, dass derartige Drehschwingungsdämpfer und Aggregate in Kombination mit dem vorgeschlagenen Fliehkraftpendel ebenfalls als komplette Einheiten von der Erfindung umfasst sind.

Das Trägerteil ist als ein um eine Drehachse verdrehbar angeordneter Pendelmassenträger vorgesehen, an dem zumindest zwei, bevorzugt zwischen zwei und sechs über den Umfang verteilte, mithilfe von zwei voneinander in Umfangsrichtung beabstandeten Pendelrollen verlagerbare Pendelmassen angeordnet sind. Das um die Drehachse drehende Trägerteil kann aus einem Pendelflansch gebildet sein, an dem beidseitig Pendelmassen angeordnet sind, wobei axial gegenüberliegende Pendelmassen mittels Ausnehmungen des Pendelflanschs durchgreifender Verbindungsmittel miteinander zu einer Pendelmasseneinheit verbunden sind. Alternativ kann das Trägerteil aus zwei Seitenteilen gebildet sein, die zwischen sich axial erweiterte Bereiche bilden, in denen die Pendelmassen aufgenommen sind. Erfindungsgemäß sind die Pendelmassen scheibenförmig einteilig oder aus mehreren, beispielsweise zwei axial geschichteten Pendelmassenteilen gebildet. Die Pendelmassen sind mittels in Umfangsrichtung beabstandeter Pendellager pendelnd an dem Trägerteil aufgehängt. Die Pendellager sind jeweils aus einer Pendelrolle und an dem Pendelflansch beziehungsweise an den Seitenteilen und an den Pendelmassen vorgesehenen Laufbahnen gebildet, auf denen die Pendelrollen unter Fliehkrafteinwirkung der nach radial außen beschleunigten Pendelmassen abwälzen.

Die Pendelrollen wälzen jeweils auf Laufbahnen mit vorgegebenen Formkurven ab, die komplementär zueinander in den Pendelmassen und in den Seitenteilen vorgesehen sind. Hierzu sind jeweils Ausnehmungen vorgesehen, an denen die Laufbahnen eingebracht sind. Jeweils eine Pendelrolle übergreift dabei die Ausnehmungen in den Seitenteilen beziehungsweise dem Pendelflansch und in der oder den Pendelmassen, so dass hierdurch jeweils ein Pendellager ausgebildet wird. Durch die Form der Formkurven der Laufbahnen wird dabei die Pendelbahn wie Pendelschwingung einer Pendelmasse oder Pendelmasseneinheit vorgegeben, beispielsweise eine Pendelschwingung in Freiform oder eine Pendelschwingung entsprechend einer bifilar an parallel oder trapezförmig angeordneten, gedachten Pendelfäden an dem Trägerteil aufgehängten Pendelmasse oder Pendelmasseneinheit.

Das vorgeschlagene Fliehkraftpendel weist Pendelmassen auf, an deren Außenumfang jeweils Massenanhäufungen vorgesehen sind. Hierdurch wird zum einen der Schwerpunkt der Pendelmassen nach außen verlagert und zum anderen bei entsprechender radialer Kürzung des Trägerteils die Masse der Pendelmassen in demselben zur Verfügung stehenden Bauraum erhöht. Hierdurch kann die Stabilität der Pendelbewegung und/oder der Wirkungsgrad des Fliehkraftpendels erhöht werden. Desweiteren kann durch ein Trägerteil mit verringertem Durchmesser Material eingespart werden.

Eine besonders vorteilhafte Ausführungsform sieht dabei beidseitig des Trägerteils angeordnete Pendelmassen vor, wobei axial gegenüberliegende Pendelmassen mittels Ausnehmungen des Trägerteils durchgreifender Verbindungsmittel miteinander zu Pendelmassenpaaren verbunden sind.

Die Massenanhäufungen können ein- oder mehrteilig an den Außenumfängen der Pendelmassen form- oder stoffschlüssig angebracht oder angeformt sein. Erfindungsgemäß sind bei einer scheibenförmigen, beispielsweise mittels eines Stanzverfahrens aus Blech vorgesehenen Ausbildung der Pendelmassen die Massenanhäufungen aus zumindest über einen Teilbereich des Außenumfangs axial umgelegten axialen Ansätzen gebildet, wobei die axialen Ansätze der jeweils eine Pendelmasseneinheit bildenden Pendelmassen axial aufeinander zuweisend ausgerichtet sind. Die axialen Ansätze können aneinander gelegt sein und zur Vermeidung von Geräuschen miteinander stoffschlüssig und/oder bedämpft miteinander verbunden sein. Erfindungsgemäß ist zwischen den axialen Ansätzen ein Axialspalt vorgesehen.

Gemäß einer weiteren vorteilhaften Ausführungsform können axial gegenüberliegende, eine Pendelmasseneinheit bildende Pendelmassen radial außen axial umgelegte Laschen aufweisen, die in Umfangsrichtung abwechselnd an den Pendelmassen vorgesehen sind und sich axial übergreifen, so dass ein an sich im Wesentlichen geschlossener Außenumfang einer Pendelmasse gebildet ist. Hierzu können in Umfangsrichtung zwischen den Laschen radial erweiterte Stege vorgesehen sein, an denen die Laschenenden mit oder ohne Axialspalt angelegt sein können.

In einer weiteren vorteilhaften Ausführungsform können die Pendelmasseneinheiten einteilig ausgebildet sein, wobei die Massenanhäufungen beziehungsweise axialen Ansätze einen Bügel zwischen den Pendelmassen bilden. Der Bügel kann zur verbesserten Ausbildung der Materialumformung Ausnehmungen enthalten. Derartige Pendelmasseneinheiten können mittels eines Stanz- und Umformverfahrens aus Blech hergestellt sein. Es kann beispielsweise zur Einbringung der Pendelrolle in die Laufbahnen vorteilhaft sein, wenn die Pendelmasseneinheiten nach oder während des Fügens auf das Trägerteil in ihre Endlage gebogen werden. Die die Pendelmassen bildenden Wangenteile der Pendelmasseneinheiten können erst während des Fügevorgangs in ihre Endlage umgeformt oder vorgebogen sein und die Endlage nach Einbringen der Pendelrollen eingestellt wird. Bei einer derartigen Ausführungsform kann die Verbindung der Pendelmassen von dem radial außen als Massenanhäufung ausgebildeten Bügel übernommen werden, weitere Verbindungsmittel und die hierfür notwendigen Ausnehmungen im Trägerteil können hierbei unterbleiben. Die Pendelmassen mit radial außen das Trägerteil umgreifenden axialen Ansätzen können weiterhin als Berstschutz dienen, indem die axialen Ansätze nach radial außen beschleunigte Kleinteile des Fliehkraftpendels, beispielsweise defekte Pendelrollen, Verbindungsmittel, Anschlagpuffer und dergleichen zurückhalten oder zumindest abbremsen.

Um Anschläge der Pendelmassen an dem Trägerteil zu vermeiden, ist über einen vorgesehenen Schwingwinkel der Pendelmassen gegenüber dem Trägerteil ein Radialspalt zwischen Außenumfang und Massenanhäufungen vorgesehen. Dies bedeutet, dass an jeder Position des Schwingwinkels ein Radialspalt zwischen Massenanhäufungen und Trägerteil erhalten bleibt. Hierbei können die Schwingwinkel durch Anschlagbegrenzungen in Umfangsrichtung begrenzt werden. Beispielsweise können die vorgesehenen Schwingwinkel mittels zwischen den Pendelmassen und dem Trägerteil wirksam angeordneten Gummipuffer begrenzt sein. Derartige Anschlagsbegrenzungen können beispielsweise durch die mit Gummipuffern ummantelten Verbindungselemente zwischen den axial benachbarten Pendelmassen gebildet sein.

Gemäß einer weiteren Ausführungsform des Fliehkraftpendels kann radial zwischen dem Trägerteil und den Massenanhäufungen der Pendelmassen ein über einen Umfang erstrecktes, streifenförmiges Anschlagelement angeordnet sein. Dieses Anschlagelement dämpft Anschläge zwischen den Pendelmassen und dem Trägerteil und ist aus elastischem Material, beispielsweise einem Elastomer, Gummi oder dergleichen als Gummipuffer ausgebildet. Das streifenförmige Anschlagelement kann stoff- oder formschlüssig oder adhäsiv mit dem Trägerteil oder der Pendelmasse oder Pendelmasseneinheit verbunden sein. Beispielsweise kann das Anschlagelement beispielsweise jeweils in Umfangsrichtung endseitig in die Pendelmasse oder Pendelmasseneinheit eingehängt sein. Das Anschlagelement kann durch tangentialen Anschlag der Pendelmassen gegenüber dem Trägerteil während einer Pendelbewegung den Schwingwinkel der Pendelmasse gegenüber dem Trägerteil begrenzen. Durch den tangentialen Anschlag können besonders weiche Anschläge erzielt werden.

Die Erfindung wird anhand des in den Figuren 1 bis 21 dargestellten Ausführungsbeispiels näher erläutert. Dabei zeigen:
- Figur 1: den oberen Teil einer um eine Drehachse angeordneten Drehschwingungsisolationseinrichtung mit einem Fliehkraftpendel nach dem Stand der Technik im Schnitt,
- Figur 2: den oberen Teil einer entsprechend der Darstellung der Figur 1 dargestellten Drehschwingungsisolationseinrichtung mit einem Fliehkraftpendel mit Masseanhäufungen an den Pendelmassen entlang einer ersten Schnittlinie,
- Figur 3: die Drehschwingungsisolationseinrichtung der Figur 2 entlang einer zweiten Schnittlinie,
- Figur 4: das Fliehkraftpendel der Figuren 2 und 3 in Teilansicht,
- Figur 5: das Fliehkraftpendel der Figuren 2 bis 4 in Teilansicht bei abgenommenen vorderen Pendelmassen,
- Figur 6: das Fliehkraftpendel der Figuren 2 bis 5 in geschnittener 3D-Darstellung,
- Figur 7: eine 3D-Darstellung des Fliehkraftpendels der Figuren 2 bis 6,
- Figur 8: eine Pendelmasseneinheit des Fliehkraftpendels der Figuren 2 bis 7 in 3D-Darstellung,
- Figur 9: eine Pendelmasse des Fliehkraftpendels der Figuren 2 bis 7 in 3D-Darstellung,
- Figur 10: ein Verbindungsmittel des Fliehkraftpendels der Figuren 2 bis 7 in 3D-Darstellung,
- Figur 11: eine Teilansicht eines gegenüber dem Fliehkraftpendel der Figuren 2 bis 7 abgeänderten Fliehkraftpendels,
- Figur 12: das Fliehkraftpendel der Figur 11 in Teilansicht bei abgenommenen vorderen Pendelmassen,
- Figur 13: eine geschnittene 3D-Ansicht des Fliehkraftpendels der Figuren 11 und 12,
- Figur 14: eine 3D-Ansicht des Fliehkraftpendels der Figuren 11 bis 13,
- Figur 15: eine Pendelmasseneinheit des Fliehkraftpendels der Figuren 11 bis 14 in 3D-Ansicht,
- Figur 16: eine Pendelmasse des Fliehkraftpendels der Figuren 11 bis 14 in 3D-Ansicht,
- Figur 17: ein streifenförmiges Anschlagelement des Fliehkraftpendels der Figuren 11 bis 14 in 3D-Ansicht aus zwei Blickrichtungen,
- Figur 18: ein Verbindungsmittel des Fliehkraftpendels der Figuren 11 bis 14
- Figur 19: eine geschnittene 3D-Teilansicht eines gegenüber dem Fliehkraftpendel der Figuren 1 bis 18 abgeänderten Fliehkraftpendels,
- Figur 20: eine Pendelmasseneinheit des Fliehkraftpendels der Figur 19 in 3D-Ansicht
und
- Figur 21: eine Pendelmasse der Pendelmasseneinheit der Figur 20 in 3D-Ansicht.

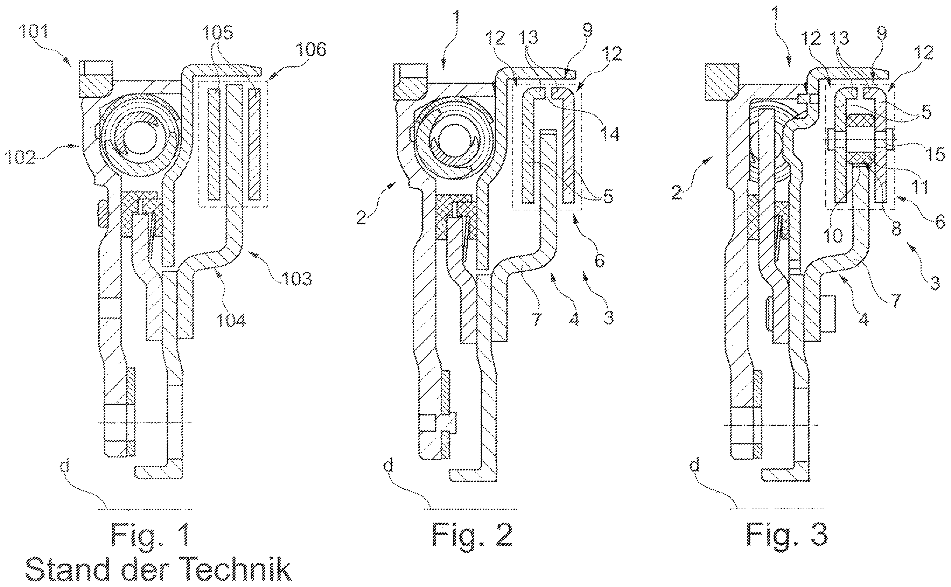

Die Figur 1 zeigt den oberen Teil der um eine Drehachse verdrehbaren Drehschwingungsisolationseinrichtung 101 mit dem Drehschwingungsdämpfer 102 und dem ausgangsseitig am Drehschwingungsdämpfer 102 angeordneten Fliehkraftpendel 103 nach dem Stand der Technik. Das Trägerteil 104 des Fliehkraftpendels 103 nimmt radial außen pendelnd über den Umfang verteilt und beidseitig des Trägerteils 104 angeordnete Pendelmassen 105 auf, die in dem zur Verfügung gestellten Bauraum 106 untergebracht sind. Die Pendelmassen 105 sind scheibenförmig ausgebildet, die eine durch den vorgegebenen Bauraum 106 beschränkte Masse und einen vorgegebenen Schwerpunkt aufweisen.

Die Figuren 2 und 3 zeigen entsprechend der Darstellung der Drehschwingungsisolationseinrichtung 1 der Figur 1 die um die Drehachse d verdrehbare Drehschwingungsisolationseinrichtung 1 entlang zweier unterschiedlicher Schnittlinien mit dem als Zweimassenschwungrad ausgebildeten Drehschwingungsdämpfer 2 und dem ausgangsseitig an diesem angeordneten wie beispielsweise mit dessen Ausgangsteil vernieteten Fliehkraftpendel 3. Das Fliehkraftpendel 3 enthält das als Pendelflansch 7 ausgebildete Trägerteil 4 mit beidseitig angeordneten Pendelmassen 5, wobei axial gegenüberliegende Pendelmassen 5 jeweils mittels der Verbindungsmittel 8 zu einer Pendelmasseneinheit 9 verbunden sind. Die Verbindungsmittel 8 durchgreifen Ausnehmungen 10 des Pendelflanschs 7 und sind als stufenförmig ausgebildete Abstandsbolzen 15 mit Gummipuffern 11 versehen. Entsprechend der Ausdehnung der Ausnehmungen 10 begrenzen die Verbindungsmittel 8 den Schwingwinkel der Pendelmassen 5 und dienen daher als Anschlagelemente.

Um bei dem vorgegebenen Bauraum 6, der beispielsweise dem Bauraum 106 der Figur 1 entspricht eine höhere Masse unterbringen zu können sowie den Schwerpunkt der Pendelmassen 5 beziehungsweise der Pendelmasseneinheiten 9 nach radial außen verlagern zu können und damit die Pendelmassen 5 unter Fliehkrafteinfluss stabiler auf ihren Pendelbahnen zu halten, sind an deren Außenumfängen die Massenanhäufungen 12 vorgesehen. In dem gezeigten Ausführungsbeispiel sind die Pendelmassen 5 scheibenförmig aus Blech hergestellt. Hierbei sind die Massenanhäufungen durch Umlegen der Außenumfänge erfolgt. Demnach sind an den Pendelmassen axiale Ansätze 13 einteilig angeformt, die bei den beiden axial gegenüberliegenden Pendelmassen 5 aufeinander zuweisend ausgebildet sind. Hierbei ist zwischen den beiden axialen Ansätzen 13 ein Axialspalt 14 ausgebildet.

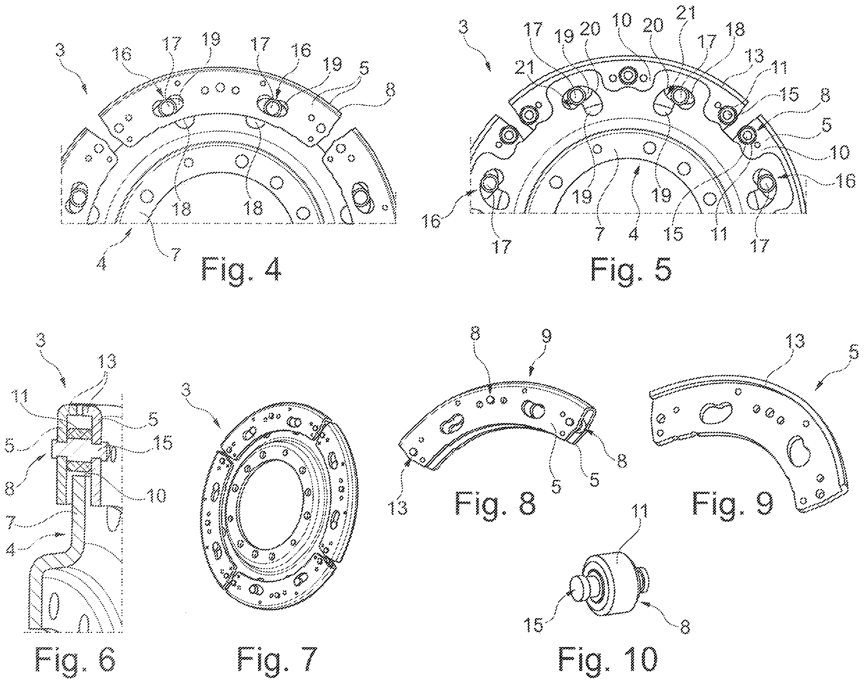

Die Zusammenschau der Figuren 4 bis 6 zeigt das Fliehkraftpendel 3 der Figuren 2 und 3 in verschiedenen Ansichten mit dem als Pendelflansch 7 ausgebildeten Trägerteil 4 und den an diesem mittels der Pendellager 16 pendelnd aufgenommenen Pendelmassen 5, wobei in Figur 5 die vorderen Pendelmassen zur besseren Ansicht des Pendelflanschs 7 mit den Ausnehmungen 10 für die Verbindungsmittel 8 abgenommen sind. Die Pendellager 16 enthalten die Pendelrollen 17, die die axial gegenüberliegenden Ausnehmungen 18, 19 der Pendelmassen 5 und des Pendelflanschs 7 durchgreifen und unter Fliehkrafteinwirkung auf den durch diese gebildeten Laufbahnen 20, 21 abwälzen.

Die axialen Ansätze 13 verlagern den Schwerpunkt der Pendelmassen 5 nach radial außen und stabilisieren die Pendelmassen 5 an den Pendellagern 16 am Trägerteil 4. Desweiteren können die axialen Ansätze 13 als Berstschutz dienen und Kleinteile des Fliehkraftpendels 3, beispielsweise defekte und sich von den Abstandsbolzen 15 lösende Gummipuffer 11 zurückhalten.

Zur Vervollständigung der Darstellung des Fliehkraftpendels 3 zeigen die Figuren 7 bis 10 3D-Ansichten des Fliehkraftpendels 3 im Zusammenbau (Figur 7), eine mittels dreier in Umfangsrichtung beabstandeter Verbindungsmittel 8 aus zwei Pendelmassen 5 gefügte Pendelmasseneinheit 9 (Figur 8), eine Pendelmasse 5 mit dem axialen Ansatz 13 (Figur 9) und ein Verbindungsmittel 8 mit einem Abstandsbolzen 15 und einem diesen umgebenden Gummipuffer 11 zur Bildung eines Anschlagelements (Figur 10).

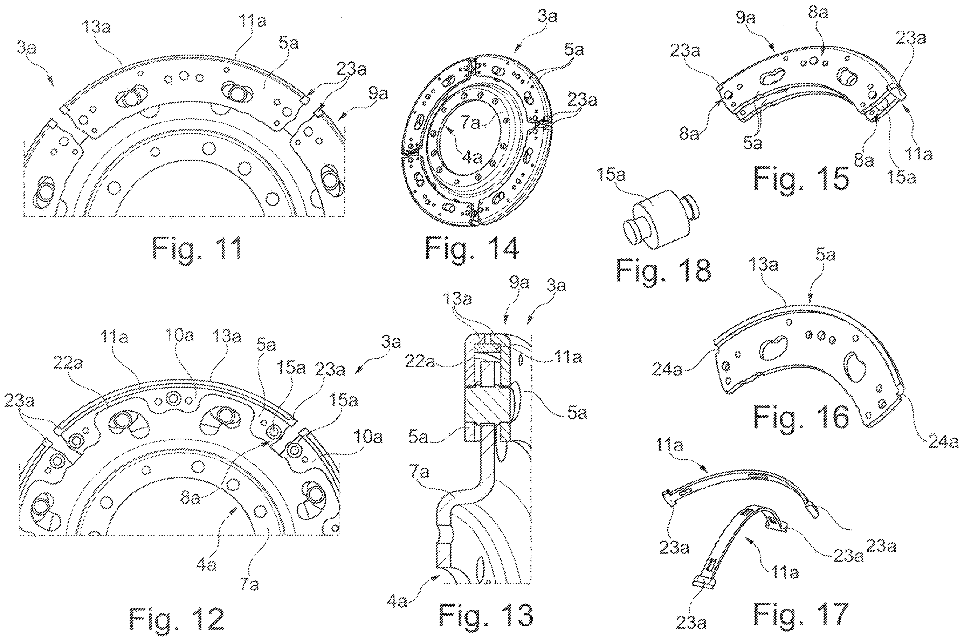

Die Figuren 11 bis 14 zeigen in der Zusammenschau das gegenüber dem Fliehkraftpendel 3 der Figuren 2 bis 7 abgeänderte Fliehkraftpendel 3a in unterschiedlichen, jeweils den Figuren 2 bis 7 entsprechenden Darstellungen. Der wesentliche Unterschied des Fliehkraftpendels 3a gegenüber dem Fliehkraftpendel 3 besteht in der Ausbildung der Begrenzung des Schwingwinkels der Pendelmassen 5, 5a gegenüber dem als Pendelflansch 7, 7a ausgebildeten Trägerteil 4, 4a. In dem Fliehkraftpendel 3 der vorhergehenden Figuren dienen hierzu die im Wesentlichen beziehungsweise mit einem hohen Anteil in Umfangsrichtung wirksamen Verbindungsmittel 8 mit den Gummipuffern 11. Im Unterschied hierzu werden in dem Fliehkraftpendel 3a lediglich Abstandsbolzen 15a ohne Gummipuffer als Verbindungsmittel 8a eingesetzt, bei denen ein Kontakt mit den Wandungen der Ausnehmungen 10a nicht vorgesehen ist. Vielmehr ist an dem Innenumfang der axialen Ansätze 13a ein streifenförmiges Anschlagelement 11a eingelegt, das beispielsweise als Gummielement oder Gummipuffer ausgelegt sein kann. Das Anschlagelement 11a tritt bei maximalem Schwingwinkel zwischen Pendelmassen 5a und Pendelflansch 7a mit einer Anschlagfläche 22a am Außenumfang des Pendelflanschs 7a in Kontakt und bremst die Pendelmassen tangential vor einer Berührung der Abstandsbolzen 15a mit dem Pendelflansch 7a. Die Anschlagelemente 11a erstrecken sich im Wesentlichen über den Umfang einer Pendelmasse 5a beziehungsweise einer Pendelmasseneinheit 9a und weist jeweils endseitig Befestigungsbereiche 23a auf, mittels derer die Anschlagelemente 11a in die Pendelmasseneinheiten 9a eingehängt sind.

Die Figur 15 zeigt eine 3D-Darstellung einer aus den Pendelmassen 5a gebildeten Pendelmasseneinheit 9a mit mittels der als Abstandsbolzen 15a ausgebildeten Verbindungsmittel 8a miteinander verbundenen Pendelmassen 5a. An dem Innenumfang der axialen Ansätze ist das Anschlagelement 11a eingelegt und mittels der Befestigungsbereiche 23a in der Pendelmasseneinheit 9a befestigt.

Die Figur 16 zeigt eine der Pendelmasse 5 der Figur 8 ähnliche Pendelmasse 5a des Fliehkraftpendels 3a in 3D-Ansicht mit dem axialen Ansatz 13a. In Umfangsrichtung endseitig sind die Ausnehmungen 24a zur Aufnahme der Befestigungsbereiche 23a (Figur 15) des Anschlagelements 11a vorgesehen.

Die Figur 17 zeigt das Anschlagelement 11a aus zwei unterschiedlichen Blickrichtungen mit den endseitigen Befestigungsbereichen 23a.

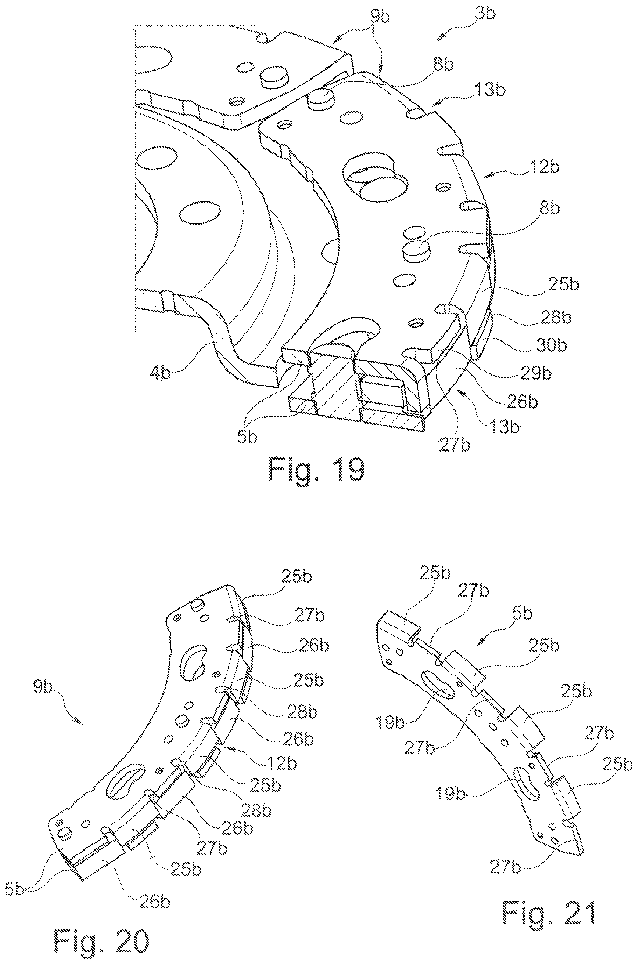

Die Figur 18 zeigt eine 3D-Ansicht des Abstandsbolzens 15a ohne Gummipuffer. Die Figur 19 zeigt das gegenüber den Fliehkraftpendeln 3, 3a der vorhergehenden Figuren abgeänderte Fliehkraftpendel 3b in geschnittener 3D-Ansicht. An dem Trägerteil 4b sind beidseitig zu Pendelmasseneinheiten 9b verbundene Pendelmassen 5b in entsprechender Weise pendelfähig aufgenommen. Hierbei sind die Massenanhäufungen 12b der Pendelmassen 5b aus radial außen umgelegten axialen Ansätzen 13b gebildet. Die axialen Ansätze 13b als Laschen 25b, 26b vorgesehen, die über den Umfang abwechselnd an den Pendelmassen 5b umgelegt sind. Dabei greifen jeweils gegenüberliegende Laschen 25b, 26b einer Pendelmasse 5b in die Lücken 27b, 28b zwischen den Laschen 26b, 25b der axial gegenüberliegenden Pendelmasse 5b ein, so dass radial außen eine im Wesentlichen geschlossene Materialanhäufung der Pendelmasseneinheiten 9b gebildet wird. Hierbei können im Bereich der Lücken 27b, 28b die Pendelmassen 5b radial erweiterte Ansätze 29b, 30b aufweisen, an denen die Laschen 25b, 26b mit oder ohne Axialspalt angelegt sind. Axial gegenüberliegende Pendelmassen 5b sind mittels der Verbindungsmittel 8b zu einer Pendelmasseneinheit 9b verbunden.

Die Figur 20 zeigt eines der über den Umfang angeordneten Pendelmasseneinheiten 9b der Figur 19 in 3D-Ansicht. Die Laschen 25b, 26b wechseln in jeder der Pendelmassen 5b komplementär zueinander mit den Lücken 27b, 28b ab, so dass sich die Laschen 25b, 26b der Pendelmassen 5b axial verzahnen und radial außen einen geschlossenen Verbund zur Bildung einer Massenanhäufung 12b bilden.

Die Figur 21 zeigt eine einzelne Pendelmasse 5b des Fliehkraftpendels 3b der Figur 19 in 3D-Ansicht mit den Laschen 25b und Lücken 27b. Aufgrund der Ausbildung einer endseitigen Lasche 25b und einer an der gegenüberliegenden Seite angeordneten Lücke 27b, der Gleichverteilung von Lücken 27b und Laschen 25b sowie der gleichartigen der Ausnehmungen 19b zur Bildung der Pendellager und Aufnahme der Verbindungsmittel können zwei identische Pendelmassen 5b als Gleichteile zur Bildung einer Pendelmasseneinheit 9b (Figur 20) vorgesehen werden.

### Bezugszeichenliste

- 1: Drehschwingungsisolationseinrichtung
- 1a: Drehschwingungsisolationseinrichtung
- 2: Drehschwingungsdämpfer
- 3: Fliehkraftpendel
- 3a: Fliehkraftpendel
- 3b: Fliehkraftpendel
- 4: Trägerteil
- 4a: Trägerteil
- 4b: Trägerteil
- 5: Pendelmasse
- 5a: Pendelmasse
- 5b: Pendelmasse
- 6: Bauraum
- 7: Pendelflansch
- 7a: Pendelflansch
- 8: Verbindungsmittel
- 8a: Verbindungsmittel
- 8b: Verbindungsmittel
- 9: Pendelmasseneinheit
- 9a: Pendelmasseneinheit
- 9b: Pendelmasseneinheit
- 10: Ausnehmung
- 10a: Ausnehmung
- 11: Gummipuffer
- 11a: Anschlagelement
- 12: Massenanhäufung
- 12b: Massenanhäufung
- 13: axialer Ansatz
- 13a: axialer Ansatz
- 13b: axialer Ansatz
- 14: Axialspalt
- 15: Abstandsbolzen
- 15a: Abstandsbolzen
- 16: Pendellager
- 17: Pendelrolle
- 18: Ausnehmung
- 19: Ausnehmung
- 19b: Ausnehmung
- 20: Laufbahn
- 21: Laufbahn
- 22a: Anschlagfläche
- 23a: Befestigungsbereich
- 24a: Ausnehmung
- 25b: Lasche
- 26b: Lasche
- 27b: Lücke
- 28b: Lücke
- 29b: Ansatz
- 30b: Ansatz
- 101: Drehschwingungsisolationseinrichtung
- 102: Drehschwingungsdämpfer
- 103: Fliehkraftpendel
- 104: Trägerteil
- 105: Pendelmasse
- 106: Bauraum
- d: Drehachse

## Patentansprüche

1. Fliehkraftpendel (3, 3a, 3b) mit einem Trägerteil (4, 4a, 4b) und an diesem an Pendellagern (16) im Fliehkraftfeld pendelnd aufgehängten, über den Umfang verteilt angeordneten Pendelmassen (5, 5a, 5b), wobei an dem Außenumfang der Pendelmassen (5, 5a, 5b) Massenanhäufungen (12, 12b) vorgesehen sind, wobei die Pendelmassen (5, 5a, 5b) scheibenförmig ausgebildet sind und die Massenanhäufungen (12, 12b) aus zumindest über einen Teilbereich des Außenumfangs axial umgelegten axialen Ansätzen (13, 13a, 13b) gebildet sind, wobei die axialen Ansätze (13, 13a, 13b) der jeweils eine Pendelmasseneinheit (9, 9a, 9b) bildenden Pendelmassen (5, 5a, 5b) axial aufeinander zuweisend ausgerichtet sind und **dadurch gekennzeichnet ist, dass** zwischen den axialen Ansätzen (13, 13a) ein Axialspalt (14) vorgesehen ist.

2. Fliehkraftpendel (3, 3a, 3b) nach Anspruch 1, **dadurch gekennzeichnet, dass** die Pendelmassen (5, 5a, 5b) beidseitig des Trägerteils (4, 4a, 4b) angeordnet sind und axial gegenüberliegende Pendelmassen (5, 5a, 5b) mittels Ausnehmungen (10, 10a) des Trägerteils (4, 4a, 4b) durchgreifender Verbindungsmittel (8, 8a, 8b) miteinander zu Pendelmasseneinheiten (9, 9a, 9b) verbunden sind.

3. Fliehkraftpendel (3b) nach Anspruch 1 oder 2, **dadurch gekennzeichnet, dass** die axialen Ansätze (13b) aus über den Umfang beabstandeten umgelegten, einander axial übergreifenden Laschen (25b, 26b) gebildet sind.

4. Fliehkraftpendel (3, 3b) nach einem der Ansprüche 1 bis 3, **dadurch gekennzeichnet, dass** über einen vorgesehenen Schwingwinkel der Pendelmassen (5, 5b) gegenüber dem Trägerteil (4, 4b) ein Radialspalt zwischen Außenumfang des Trägerteils (4, 4b) und den Massenanhäufungen (12, 12b) vorgesehen ist.

5. Fliehkraftpendel (3, 3b) nach Anspruch 4, **dadurch gekennzeichnet, dass** die vorgesehenen Schwingwinkel mittels zwischen den Pendelmassen (5, 5b) und dem Trägerteil (4, 4b) wirksam angeordneten Gummipuffern (11) begrenzt ist.

6. Fliehkraftpendel (3a, 3b) nach einem der Ansprüche 1 bis 4, **dadurch gekennzeichnet, dass** radial zwischen dem Trägerteil (4a, 4b) und den Massenanhäufungen (12b) der Pendelmassen (5a, 5b) ein über einen Umfang der Pendelmassen (5a, 5b) erstrecktes, streifenförmiges Anschlagelement (11a) angeordnet ist.

7. Fliehkraftpendel (3a) nach Anspruch 6, **dadurch gekennzeichnet, dass** das Anschlagelement (11a) in die Pendelmasse (5a) eingehängt ist.

8. Fliehkraftpendel (3a, 3b) nach Anspruch 6 oder 7, **dadurch gekennzeichnet, dass** das Anschlagelement (11a) einen Schwingwinkel der Pendelmasse (5a, 5b) gegenüber dem Trägerteil (4a, 4b) begrenzt.

## Claims

1. A centrifugal pendulum (3, 3a, 3b) having a carrier part (4, 4a, 4b) and pendulum masses (5, 5a, 5b) distributed over the circumference and suspended from said carrier part on self-aligning bearings (16) in the centrifugal force field, wherein mass accumulations (12, 12b) are provided on the outer circumference of the pendulum masses (5, 5a, 5b), wherein the pendulum masses (5, 5a, 5b) have a disk-shaped design and the mass accumulations (12, 12b) are formed of axial attachments (13, 13a, 13b) which are axially folded over at least a portion of the outer circumference, wherein the axial attachments (13, 13a, 13b) of the pendulum masses (5, 5a, 5b) each forming a pendulum mass unit (9, 9a, 9b) are aligned axially facing one another and **characterized in that** an axial gap (14) is provided between the axial attachments (13, 13a).

2. The centrifugal pendulum (3, 3a, 3b) according to claim 1, **characterized in that** the pendulum masses (5, 5a, 5b) are arranged on both sides of the carrier part (4, 4a, 4b) and axially opposite pendulum masses (5, 5a, 5b) are connected to each other by means of connecting means (8, 8a, 8b) extending through recesses (10, 10a) in the carrier part (4, 4a, 4b) to form pendulum mass units (9, 9a, 9b).

3. The centrifugal pendulum (3b) according to claim 1 or 2, **characterized in that** the axial attachments (13b) are formed from axially mutually overlapping lugs (25b, 26b) spaced apart over the circumference.

4. The centrifugal pendulum (3, 3b) according to one of claims 1 to 3, **characterized in that** a radial gap is provided between the outer circumference of the carrier part (4, 4b) and the mass accumulations (12, 12b) over a specified oscillation angle of the pendulum masses (5, 5b) with respect to the carrier part (4, 4b).

5. The centrifugal pendulum (3, 3b) according to claim 4, **characterized in that** the specified oscillation angle is limited by means of rubber buffers (11) effectively arranged between the pendulum masses (5, 5b) and the carrier part (4, 4b).

6. The centrifugal pendulum (3a, 3b) according to one of claims 1 to 4, **characterized in that** a strip-shaped stop element (11a) extending over a circumference of the pendulum masses (5a, 5b) is arranged radially between the carrier part (4a, 4b) and the mass accumulations (12b) of the pendulum masses (5a, 5b).

7. The centrifugal pendulum (3a) according to claim 6, **characterized in that** the stop element (11a) is suspended in the pendulum mass (5a).

8. The centrifugal pendulum (3a, 3b) according to claim 6 or 7, **characterized in that** the stop element (11a) limits an oscillation angle of the pendulum masses (5a, 5b) with respect to the carrier part (4a, 4b).

## Revendications

1. Pendule centrifuge (3, 3a, 3b) comprenant une partie support (4, 4a, 4b) et des masses pendulaires (5, 5a, 5b) réparties sur la circonférence, suspendues à celle-ci de manière pendulaire au niveau de paliers pendulaires (16) dans le champ de force centrifuge, dans lequel des accumulations de masse (12, 12b) sont situées au niveau de la circonférence extérieure des masses pendulaires (5, 5a, 5b), dans lequel les masses pendulaires (5, 5a, 5b) sont conçues sous la forme de disque et les accumulations de masse (12, 12b) sont formées d'épaulements axiaux (13, 13a, 13b) répartis axialement sur au moins une zone partielle de la circonférence extérieure, dans lequel les épaulements axiaux (13, 13a, 13b) des masses pendulaires (5, 5a, 5b) formant respectivement une unité de masse pendulaire (9, 9a, 9b) sont alignés axialement l'un en face de l'autre et **caractérisé en ce qu'**une fente axiale (14) est située entre les épaulements axiaux (13, 13a).

2. Pendule centrifuge (3, 3a, 3b) selon la revendication 1, **caractérisé en ce que** les masses pendulaires (5, 5a, 5b) sont disposées des deux côtés de la partie support (4, 4a, 4b) et les masses pendulaires (5, 5a, 5b) axialement opposées sont raccordées les unes aux autres pour former les unités de masse pendulaire (9, 9a, 9b) au moyen de moyens de raccordement (8, 8a, 8b) traversants des évidements (10, 10a) de la partie support (4, 4a, 4b).

3. Pendule centrifuge (3b) selon la revendication 1 ou 2, **caractérisé en ce que** les épaulements axiaux (13b) sont formés de languettes (25b, 26b) se chevauchant axialement réparties et espacées sur la circonférence.

4. Pendule centrifuge (3, 3b) selon l'une quelconque des revendications 1 à 3, **caractérisé en ce que**, sur un angle d'oscillation prévu des masses pendulaires (5, 5b) par rapport à la partie support (4, 4b), une fente radiale est située entre la circonférence extérieure de la partie support (4, 4b) et les accumulations de masse (12, 12b).

5. Pendule centrifuge (3, 3b) selon la revendication 4, **caractérisé en ce que** l'angle d'oscillation prévu est limité au moyen de tampons en caoutchouc (11) activement disposés entre les masses pendulaires (5, 5b) et la partie support (4, 4b).

6. Pendule centrifuge (3a, 3b) selon l'une quelconque des revendications 1 à 4, **caractérisé en ce qu'**un élément de butée (11a) en forme de bande, s'étendant sur une circonférence des masses pendulaires (5a, 5b), est disposé radialement entre la partie support (4a, 4b) et les accumulations de masse (12b) des masses pendulaires (5a, 5b).

7. Pendule centrifuge (3a) selon la revendication 6, **caractérisé en ce que** l'élément de butée (11a) est suspendu dans la masse pendulaire (5a).

8. Pendule centrifuge (3a, 3b) selon la revendication 6 ou 7, **caractérisé en ce que** l'élément de butée (11a) limite un angle d'oscillation de la masse pendulaire (5a, 5b) par rapport à la partie support (4a, 4b).
